Europäisches Patentamt

European Patent Office

Office européen des brevets

(19)

(11) **EP 0 851 238 A2**

(12) **EUROPEAN PATENT APPLICATION**

(43) Date of publication:
01.07.1998 Bulletin 1998/27

(51) Int Cl.⁶: **G01S 13/524**, G01S 13/22

(21) Application number: 97309035.0

(22) Date of filing: 11.11.1997

(84) Designated Contracting States:
**AT BE CH DE DK ES FI FR GB GR IE IT LI LU MC NL PT SE**
Designated Extension States:
**AL LT LV MK RO SI**

(30) Priority: **10.12.1996 GB 9625632**

(71) Applicant: **GEC-MARCONI LIMITED
Stanmore, Middlesex HA7 4LY (GB)**

(72) Inventors:
• **Molyneux-Berry, Robert Bewes
Danbury, Essex, CM3 4PN (GB)**

• **Langsford, Peter Alan
Maldon, Essex, CM9 6DU (GB)**
• **Wardell, Colin
Woodham Mortimer, Maldon,
Essex, CM9 6SZ (GB)**

(74) Representative: **Fitchett, Stuart Paul
GEC Patent Department,
Waterhouse Lane
Chelmsford, Essex CM1 2QX (GB)**

(54) **Doppler radar**

(57)    There is provided radar apparatus, and a method, for determining the approach velocity of a target whereby the target is first classified as a "target of interest" by a thresholding process applied to successive signals to identify potential targets. Doppler processing is then applied only to a selected portion of data relating to the target of interest.

This invention enables existing moving target indicator MTI radars (1) to be upgraded to give full Doppler capability without the excessive processing capacity required by conventional Doppler radars.

Figure 1

## Description

The present invention relates to apparatus for, and a method of, determining the approach velocity of a target.

A basic understanding of the principle of Doppler radars is necessary to the understanding of the present invention. A radar echo from a moving object (or target) is characterised by a frequency shift relative to the radar transmitter frequency. This frequency shift is proportional to the transmitter frequency and also to the rate at which the distance (or range) between the target and the radar was changing at the time when the echo signal was scattered from the target. A positive frequency shift (making the echo frequency higher than the transmitter frequency) occurs when the target approaches the radar and a negative shift occurs when the target recedes.

A radar employing the Doppler effect, known as a Doppler radar, needs to resolve and measure small frequency shifts. To do this the radar dwell time in any target direction needs to be sufficient for the degree of resolution required. In theory the best achievable Doppler resolution (in Hz) is the reciprocal of the dwell time in seconds. For centimetric radars concerned with targets on or close to the Earth's surface the Doppler resolution required is usually a few tens of Hz, so dwell times in the range 10 to 50 milliseconds are commonly used.

In the case of radars with mechanically rotated antenna beams the dwell time is limited by (and usually equal to) the time taken by the beam (of finite width) to pass across the target position. This limits the maximum beam rotation rate and determines the minimum time interval between successive looks at a target, on successive rotations.

Relatively powerful radars generally employ pulsed transmissions. It is usually impractical to employ single pulses 10 to 50 millisecs long so instead a succession of short pulses are transmitted during the dwell time. Each pulse for which a useful target echo is returned is called a strike. In order to achieve the required Doppler resolution the echoes from all strikes constituting one look at a target must be in some way coherently integrated when measuring the Doppler shift of the target in question.

In practice the (very small) Doppler shifts cannot be measured directly. Instead they are detected by observing small, progressive shifts in phase (with respect to the transmitter signal) on the sequence of strikes obtained during the dwell time. This measurement technique requires that the relationship between the transmitter signal and the local oscillator (and any other frequency reference signals used in the receiver) should be phase coherent and phase stable throughout the dwell time.

Even where a radar system is stable and fully coherent, subdivision of the dwell time into a series of very short, impulsive strikes opens the possibility of serious measurement ambiguities. These ambiguities occur because any phase comparison, made on any strike, is inherently ambiguous in respect of multiples of $2\pi$ radians. A measured phase difference of $\theta$ must therefore be interpreted as an actual difference of $(\theta \pm 2N\pi)$ where N is an unknown integer. Each plausible value of N implies two different Doppler shifts, one positive and one negative. Usually, very large values of N correspond to implausibly high target velocities which need not be considered. However, it is not unusual for there to be 20 or more plausible Doppler shift ambiguities per measurement. Unless these ambiguities can be resolved the Doppler measurement is of little use.

One known way to resolve such ambiguities. or at least to reduce their number for each measurement, is to employ transmitter pulses which are unevenly spaced in time during the dwell period. This can be implemented in a variety of ways. One common implementation introduces modest variations in the pulse repetition interval (PRI) on a pulse-by-pulse basis. This is known as PRI (or PRF) stagger (PRF = pulse repetition frequency). Another known implementation employs a short burst of pulses at one PRF followed by a second burst at a different PRF. Usually, two different PRFs are transmitted alternately in a regular manner. Strike returns from a target must include substantial parts of two or more different bursts in order to ensure a useful degree of ambiguity resolution. Strike returns from one burst are analysed to determine the apparent phase change ($\theta_1$) per pulse. The interpretation of this in terms of Doppler shift is ambiguous for reasons already explained. Strikes from the second burst are then analysed to determine $\theta_2$ which will, in general, differ from $\theta_1$ because the second burst has a different PRI. Doppler shifts calculated from $\theta_2$ will also be ambiguous, for the same reasons. However, when the set of ambiguous Doppler shifts calculated from one burst are compared with the set calculated from the second burst, one unique value should be common to both sets; this is the correct Doppler shift.

In practice, the measurement accuracy of $\theta_1$ and $\theta_2$ is limited by clutter echoes and noise, by the (relatively small) number of strikes per burst, and by stability imperfections within the radar system. The sets of Doppler shift values calculated from $\theta_1$ and $\theta_2$ are therefore subject to small errors with the result that no unique value will match exactly but more than one value may match approximately, leaving the ambiguity problem partly but not fully resolved. However, by careful selection of the radar's design parameters it is usually possible to ensure that the residual Doppler ambiguities are well spaced in frequency, so that only the correct value lies within the plausible range for targets of interest.

Similar principles apply to radars using staggered PRFs, giving generally similar results, although details of implementation are, of course, different. In both cases (PRF staggered and burst mode systems) the Doppler processing is fully integrated into the detection process so that echo signals are resolved and separated into different Doppler bins before detection. This allows echoes allocated to different Doppler bins to be tested separately for detection decisions.

When carefully designed, a Doppler radar is very effective and not only positively identifies a moving target from clutter, or stationary objects, but also provides the closing/separation velocity of the target relative to the radar. However it will be appreciated from the above that a great deal of real time processing is required to process all the data received making such radars very costly, especially for radars whose antennas form multiple (eg. stacked) receiving beams, each of which requires a complete Doppler processing channel.

One very important advantage of Doppler radars is that they can distinguish moving targets, characterised by non-zero Doppler shifts, from signals reflected from stationary or slow-moving clutter, such as tall buildings, terrain features, rain clouds, etc, falling within the radar beam at ranges of interest. Because fast-moving targets of interest are detected in different Doppler bins to those to which echoes from stationary or slow-moving clutter are allocated, the clutter echoes do not compete with the wanted target echoes. This enables a high detection sensitivity to be used for rapidly approaching targets seen in regions of clutter. It also enables the radar to identify and disregard the clutter.

The ability to reject clutter echoes is essential to many radar applications but the cost of providing full Doppler processing may be considered too high. Instead, a greatly simplified form of processing, known as moving target indication (MTI) may be used. This rejects echoes from stationary or slow-moving objects, including most types of clutter, but does not otherwise attempt to measure Doppler shifts on target echoes.

The essential principle of MTI processing is to subtract the echo signals obtained on successive strikes. Since the PRI is likely to be, at most, a few millisecs, echoes received on successive strikes on stationary clutter or slow-moving targets should be almost identical. Subtracting one from another should leave only a small residue. By contrast. successive strikes on a rapidly moving target will show a relative Doppler phase shift when received. Subtracting these strikes returns should leave a much larger residue. If the relative phase shift approaches $\pi$ (180 degrees) the "subtracted" signals will in fact add to leave a "residue" of considerably greater amplitude than either signal on its own.

MTI processing requires the radar transmitter and receiver to be coherent and phase-stable from pulse to pulse. Improved clutter rejection can be achieved by extending the simple subtraction method to cover several pulses (termed double or triple cancellation, etc.); this requires suitable coherence and stability attributes over the duration of several pulses.

However, if the approach velocity of a moving target happens to be such that the relative phase shift on successive pulses is exactly $2\pi$ (or $\pm2N\pi$, etc) its echo will be cancelled by the subtraction process and any chance of detection will be lost. This is termed Doppler blindness and is closely analogous to Doppler ambiguity in a Doppler radar.

The standard cure for Doppler blindness is to vary PRI during the dwell time, by using either PRF stagger of burst mode transmissions, as in a Doppler radar: targets which are blind at one PRI should be seen clearly when a different PRI is used. The method is not perfect but, as with Doppler ambiguity, by careful choice of radar design parameters the lowest residual blind speed can be raised to a velocity which is not plausible for targets of interest.

In summary, an MTI radar can achieve clutter rejection performance comparable to that of a Doppler radar having similar detection performance. The MRI radar transmitter must have coherence, stability and PRF stagger attributes similar to those of a Doppler radar but the receiver processing is much simplified and, if desired, can easily be implemented without using advanced digital techniques. MTI technology has been developed to give good performance and reliability at modest cost; very many such radars are currently in service.

It is an object of the present invention to provide a Doppler radar which requires less processing power than present Doppler radars of similar performance and to provide a way to convert MTI radars to measure Doppler shifts for moving targets.

According to the first aspect of the invention there is provided radar apparatus comprising:

a transmitter arranged to transmit a series of pulses;
a receiver arranged to receive and store successive echo signals from potential targets;
a detector arranged to identify echoes of interest by means of a thresholding process applied to data originating from the received signals characterised in that a Doppler extraction processor is arranged to process stored data corresponding to an echo of interest identified by the detector in order to determine the approach velocity of a potential target corresponding to that echo.

By employing the present invention it is possible to employ the principles used in an MTI radar to identify echoes or targets of interest and then, once such a target has been identified, to process only that data relating to the target in order to obtain the approach velocity. This greatly reduces the quantity of data that has to be handled by the Doppler extraction processor. An "echo of interest" will primarily correspond to a moving target which will be distinguishable from stationary objects and background clutter. However the detector may also take into account other parameters such as strength of received signal in determining whether the target is of interest.

The stored returned signals extracted from the radar receiver before MTI subtraction has been implemented can be overwritten, therefore only a limited duration of returned signal need be stored, the stored data is preferably identified chronologically which may be achieved by time tagging the data.

In this manner the Doppler extraction processor can have access to the data required to assign an approach velocity to a target of interest, without having to have excessive memory storage. The data can conveniently be stored in RAM in the form of complex video comprising (p) and (q) signals, one in phase and one in quadrature.

Preferably the detector comprises means for subtracting successive received echoes and thresholding the difference signal obtained to determine an echo of interest. Thresholding processes can be implemented using relatively little processing power compared to performing Doppler processing every point on an image.

Advantageously the Doppler extraction processor is arranged to: retrieve from the stored data the relative phases of successive echoes from a target of interest: compare a range of velocity values with the received phase data; and identify the velocity value that best fits the phase data. (The range of velocity values is preferably limited to a plausible range for a particular target type.) The best fit can be found by calculating a fit error value for each velocity value in the range tested; the set of error values constituting an error function; prominent nulls in the error function are possible values of the target approach velocity. The approach velocity corresponding to the deepest null can then be assigned to a target of interest provided the null depth is below a predetermined threshold. To compare null depths more accurately the Doppler extraction processor may determine the best fit error values by using a finer range of velocity steps in the region of prominent nulls in the error function.

The above process permits the error function to be generated relatively quickly by using a fairly coarse velocity step, thresholding it to find prominent nulls (of which there will typically be several) and then to recalculate small sections of the function in the vicinity of these nulls, using a relatively fine step in order to determine which of the coarse nulls is in fact the deepest and whether it crosses the final acceptance threshold.

In an alternative to the above, the Doppler extraction processor can be arranged to apply a weighted "least sum of squares fit" to a null to determine the minimum of the null. Performing a weighted "least sum of squares" fit (using known algorithms) enables the absolute minimum null value to be determined for each candidate null region. One advantage of this is that the "best fit" algorithm is not based on any assumption that the reference phase θ (r) of the central strike has been measured with negligible error. This allows deeper and more reliable null values to be found in cases where the signal to noise ratio (SNR) is relatively poor.

It is preferable that the pulse repetition interval is varied, either on a pulse by pulse basis or on a burst of pulses basis, since this reduces ambiguity in the Doppler values.

The output of the Doppler extraction processor may advantageously be used to verify the target as being a "target of interest" if a velocity can be determined. This need not necessarily require the velocity value itself to be output but could simply determine that the relative phase values of a number of successive echoes are such that they correspond to a plausible velocity value.

Exploitation of Doppler data by target tracking algorithms is well known, especially where the tracks of independent targets happen to cross. However Doppler measurements obtained according to the Invention can also be exploited by false target filter algorithms. The Invention provides a good, unambiguous Doppler measurement, characterised by a unique, deep null in the error function, only in cases where a sequence of target strike echoes is characterised by a clear, orderly phase progression. It is less probable that clear-cut Doppler measurements will be obtained from (for example) a sequence of irregular, distributed strikes due either to storm-whipped sea clutter or to large flocks of birds. Failure to extract a clear Doppler measurement for a reasonably strong detection not suppressed by MTI thus indicates that the target is probably due to distributed moving clutter, ie. either false or unwanted.

Most known methods of identifying unwanted false target detections rely on comparing detections obtained over two or three looks on successive antenna rotations. By comparison, in addition to providing Dopplcr measurements for wanted targets, employing the Invention can provide an "instantaneous" test for identifying certain important (and troublesome) categories of false target.

Preferably the apparatus further comprises means for identifying slow moving clutter at least in part in dependance on the approach velocity determined by the Doppler extraction processor, means for estimating the amplitude of the signal returned by said clutter, means for generating a synthetic clutter signal and subtracting this from the received data corresponding to said clutter to obtain a residual echo signal, wherein the Doppler extraction processor determines the approach velocity of a target corresponding to the residual echo signal. The synthetic clutter signal is advantageously subtracted from the received signal at a plurality of different phase shifts in order to determine the relative phase which provides a minimum residual signal, whereby the Doppler extraction processor determines the approach velocity of a potential target corresponding to the minimum residual signal. This enables echoes from a slow moving source such as would be generated by chaff to be identified and the return signal from the slow moving source to be substantially deleted in order to expose the "hidden" target, for example an aircraft, which may already have reported by an MTI thresholding process.

According to a second aspect of the invention there is provided a method for obtaining approach velocity information from a moving target indicator radar (MTI) radar, the method comprising storing successive returned radar signals (abstracted before MTI subtraction), retrieving from the store data relating to a target of interest identified by thc MTI radar, and processing that data to determine the approach velocity of that target. This enables approach velocity information to be extracted from data already present in existing MTI radars, without requiring excessive processing power required by conventional Doppler radars.

According to a third aspect of the present invention there is provided a method of determining the approach velocity of a target, the method comprising:

transmitting a sequence of pulses of electro magnetic radiation;

receiving and storing data from successive echoes from potential targets;

identifying echoes of interest by applying of a thresholding process to data originating from successive received echoes from a potential target: and

for an echo of interest determining the approach velocity of the corresponding target.

The invention will now be described by way of example only with reference to the accompanying figures of which:

Figure 1 is a functional block diagram of the components of a radar system in accordance with the present invention;

Figure 2 illustrates an exemplary pulse repetition interval:

Figure 3 illustrates the phase ambiguity associated with a returned series of echoes; and

Figure 4 illustrates a typical phase ambiguity error function for a returned series of echo.

The invention is described below as it would be applied to a medium/long range pulsed MTI radar with a rotating antenna, transmitting in the centimetric band and using staggered PRF in order to overcome Doppler blindness. This type of radar is typical of those in which the invention is of greatest value. The description explains first the principle of the invention before discussing how it is to be implemented.

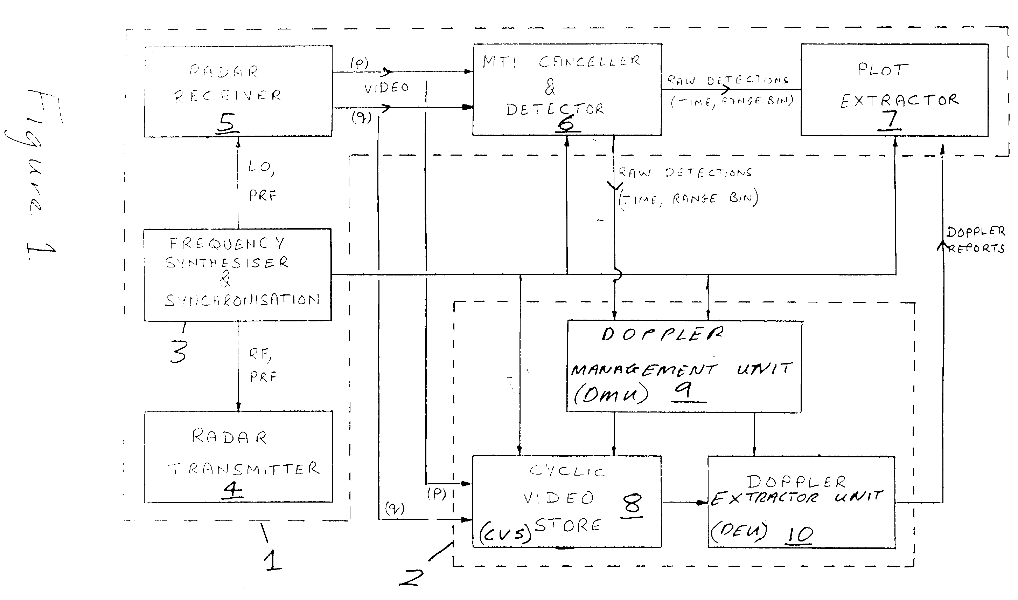

Application of the invention to the receiver of a conceptual existing MTI radar is illustrated by the outline Block Diagram shown in Figure 1. The existing radar transmitter would remain unaltered.

Figure 1 distinguishes between equipment functions 1, comprising the existing MTI radar, and equipment functions 2 added by the invention. The Doppler processing hardware to be added may consist of a digital processor supported by digital memory media. Random access memory (RAM) is suitable for temporary storage of the radar signals being processed; non-volatile memory, eg. using magnetic media, is required for long-term storage of processing and system management algorithms.

In Figure 1 the existing MTI radar is controlled by a frequency synthesiser and synchronising unit 3 . Because the MTI function requires the radar transmitter 4 and receiver 5 to be coherent and phase stable for the duration of several pulses an MTI radar will include a synchronisation unit 3 . The Doppler measurement system makes use of PRF and other synchronisation signals generated by the unit 3.

The receiver 5 supplies echo signals in video form to the MTI canceller and detector unit 6. Efficient clutter cancellation, avoiding both Doppler blindness and phase blindness normally requires double or triple cancellation performed on complex video signals. Complex video comprises two signals, one (p) in phase and the other (q) in quadrature. In some MTI radars the two parts of the complex video signal may be multiplexed in some manner. However, for simplicity of explanation it is assumed here that the two parts of the video signal are presented in separate channels.

Many MTI radars transmit chirped or phase-coded waveforms and implement pulse compression within the receiver. Pulse compression is normally implemented before the complex video waveform is presented to the MTI canceller and detection unit 6 . Provided this is the case it makes no difference (for Doppler measurement) whether or not pulse compression is used.

MTI subtraction processing may be performed by either analogue or digital means. Digital implementation is normally preferred where multiple subtraction is to be performed on complex video signals. The invention will therefore be described in relation to complex video signals presented in digitised format. A digital sampling rate of, say. 10 MHz would be typical for an existing MTI radar of the class considered. Where only analogue video is presented, one method of applying the invention would be to digitise the video signals at the input of the added Doppler extraction processor. In such cases it is desirable to use a digital sampling rate which is phase-locked to the master oscillator governing the synchronisation unit 3.

The MTI canceller and detector unit 6 subtracts echo signals due to stationary clutter and slow-moving targets before thresholding the residual video to obtain raw detections of targets of interest. In order to do this it must store and subtract video echoes received over several pulse intervals. This means that there is a short time lapse between reception of the first strike on a target and the time when unit 6 is able to report a raw detection of that target. This time lapse is termed latency; latency in unit 6 may typically be commensurate with radar dwell time.

Unit 6 provides only raw detection data. This means that each detection has provisional status and is described by parameters (e.g. azimuth, range bin, amplitude) expressed in units directly related to reference datums (timing pulses, etc.) used within the detection process but not necessarily meaningful to the end user.

The raw detection data passes to a plot extractor unit 7 . This unit stores and associates raw detection data using algorithms which decide whether adjacent detections should be reported as separate targets or combined into a single detection report. Unreliable, implausible or uninteresting detections may be rejected and the remaining "targets of interest" will be reported as target plots in a data format and related to a coordinate system which is meaningful to the end user. The end user may, for example, be a display console, a target tracking processor, or a multi-sensor data fusion processor.

In order to perform its tasks efficiently the plot extractor unit must temporarily store raw detection data and will therefore introduce some latency additional to that introduced by unit 6. A feature of the invention is that it exploits the latencies inherent in the existing detection and plot extraction systems.

The invention uses Doppler measurement algorithms which process a sequence of echoes returned by strikes on the target whose Doppler shift is being measured. Since these echoes are presented sequentially in the video signal, over a time period approximately equal to the radar dwell time, it is necessary to store the video signal temporarily, for approximately one dwell period, in order to ensure that the Doppler extraction processor can have simultaneous access to all relevant strike echoes for a given target. Video signals are already stored temporarily within unit 6 because this is necessary for subtraction processing. However, in order to avoid the need to access these signals within the existing unit, it is preferable to provide an additional cyclic video store 8 for Doppler processing.

Since the digital video sampling rate is typically around 10 MHz this store requires at most a few Megabytes of conventional RAM. The video signals are continuously written into store; signals which have been in store for more than a few tens of milliseconds become "stale" and are overwritten by fresh signals regardless of whether, in the interim, they have been used for Doppler processing. The Doppler processing management unit 9 receives timing signals generated in the radar synchronisation unit 3 and uses these to "time tag" and hence identify the pulsed video echoes stored in unit 8.

The principles of Doppler measurement used in the invention will now be explained. In order to illustrate the method quantitatively where this is helpful and to convey some estimate of "typical" values. the description given below refers to a fictitious radar having suitably rounded but fictitious operating parameter values.

For a nominal radar frequency of 1000 MHz (= 1 GHz).

The nominal wavelength is ($\lambda$) approximately 30 cm (= 0.3 m).

The standard formula for Doppler shift F(d) on a moving target echo is:

$$F(d) = 2 \times V/(\lambda)$$

where V is the radial velocity at which the target is approaching the radar (V is negative if the target is receding from the radar).

If V = 150 m/sec (typical of a subsonic aircraft);

$$F(d) = 2 \times 150/0.3 = (+)1000 \text{ Hz.}$$

Note that the Doppler shift is very small indeed by comparison with the radar frequency (1000 MHz); this is why good MTI or Doppler measurement performance requires a stable transmitter with a frequency-locked receiver.

If the existing MTI radar has a nominal dwell time of 30 millisecs; (a dwell time of this order is typical and would be necessary in order to ensure good MTI clutter cancellation), the nominal resolution for Doppler shift measurements is:

$$1/0.03 = 33.3 \text{ Hz; this corresponds to F(d)} = 5 \text{ m/sec at } \lambda = 0.3\text{m.}$$

Adapting the radar for Doppler measurement according to the invention, the nominal resolution for approach velocity is 5 m/sec. This degree of resolution would be very satisfactory in respect of flying targets but might not resolve, for example, slow-moving ships from nearby sea clutter. However, for exactly the same reasons, the radar in question would not have been able to cancel the sea clutter by means of MTI without also cancelling echoes from slow-moving ships. MTI resolution and Doppler resolution are both limited by the dwell time over which useful processing is performed. For this reason the invention seeks to process the maximum length of strike sequence which can be expected to contribute usefully to echo phase information. Alternatively the processing period can be reduced to reduce the processing load whilst maintaining a required velocity resolution.

Consider a sequence of strike echoes received during 30 msecs dwell time on one look at an isolated target. (Cases where targets are not isolated will be considered later.) During the dwell time the target will move 4.5 m closer to the radar by virtue of its approach velocity V = 150 m/sec.

If the radar transmits 5 MHz pulse compression bandwidth and compresses the received echoes to an equivalent pulse width of:

$$\text{compressed pulse width (cpw)} = 1/(\text{bandwidth}) = 0.2 \text{ microsecs.}$$

The nominal range resolution will be:

$$\text{range resolution} = (\text{cpw}) \times c/2 = 0.2 \times 300/2 = 30m \ [c = 300 \times 10^6 \text{ m/sec}].$$

Thus the effective width of each range bin used in the radar receiver cannot be less than 30 m; this is many times greater than the distance (4.5 m) which the target will move during the dwell time.

It can therefore be assumed that a range gate which receives the first target strike of a sequence will also receive useful echo signals from the remaining strikes of the sequence. Moreover, this assumption will, in general, be valid for target velocities up to V = ±1000 m/sec, i.e. for all targets likely to be of interest.

The invention exploits this by processing only those compressed pulse echoes which fall into the range bin in which a raw detection is first reported. Since a radar of the type considered might employ up to 2000 range bins per receiving channel, this allows a great reduction in the amount of Doppler processing required, compared to a conventional Doppler radar. Also, multiple detections not well isolated in azimuth will, for Doppler processing purposes, be resolved in range if they are first reported in different range bins.

Suppose that a sequence of 11 strike echoes (bracketing 10 PRIs) are received from the target during the (30 ms) dwell time. The initial strike, received at time t (0), will be received at some arbitrary phase angle θ (0) depending on target range, on transmitter frequency and on the phase response of the radar receiver. θ can be measured from the (p) and (q) parts of the compressed video pulse in the range gate in which the target echo is reported:

$$\theta = \arctan (p/q) \qquad \text{(radians)}.$$

However, this measurement is ambiguous: θ can be reported only in the range 0 to $2\pi$. The absolute value of θ is unknown.

Consider now the effect of staggered PRF. In the example the 11 strike echoes span 10 PRIs; hence the average PRI is 3 millisecs and the average PRF is 333 pulses per second (pps); these values are not untypical for an MTI radar of the class being considered. Because the PRF is staggered. individual PRIs will differ in duration. An 8-pulse stagger sequence of ±10% amplitude and with sinusoidal distribution is now considered. Typical real stagger patterns are however more complex.

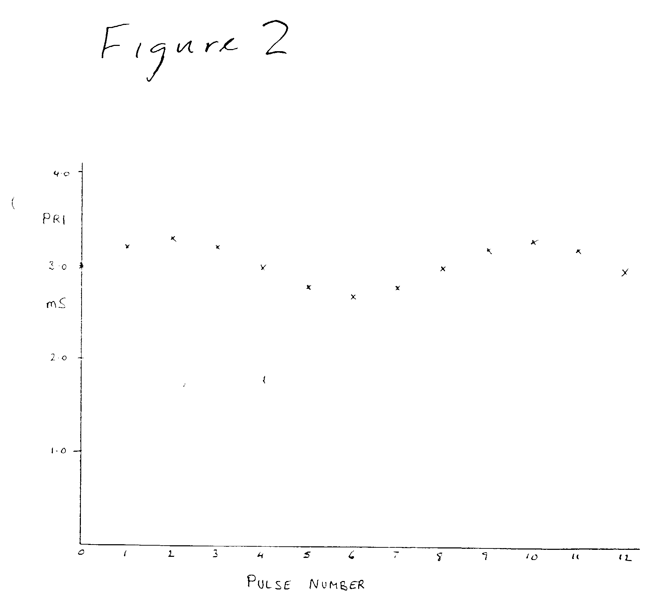

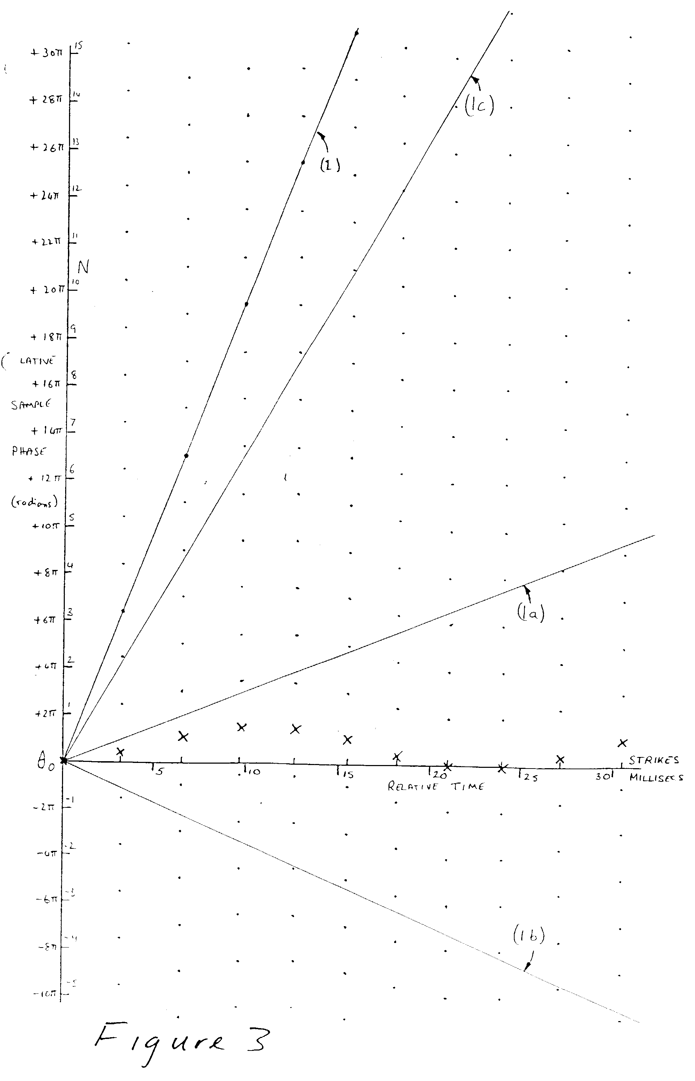

Figure 2 illustrates the PRI pattern for the example case. The start point shown in Figure 2 is arbitrary; in practice the first pulse of the 11-pulse strike sequence (pulse (0) at t (0); phase = θ (0)) could occur anywhere on the 8-pulse PRI pattern.

Based on this arbitrary start point the relative transmitter pulse times t(p) (i.e. t (0) to t (10)) of the 11-pulse sequence are easily determined; the true relative phase θ ($0 \leq \theta > 2\pi$) for each strike can be calculated:

$$\text{relative phase} = F(d) \times t(p) \times 2\pi \text{ radians}$$

$$\theta(p) = 2\pi \times \text{Mantissa} [\{F(d) \times t(p) + \theta(0)\}/2\pi].$$

The Doppler measurement system therefore has available to it:

Compressed video pulses in (p) and (q) channels, stored temporarily and covering one dwell period prior to a detection being reported.

A raw detection report giving azimuth or time data from which the radar strike sequence covering the target can be precisely identified amongst the stored video sequence.

A range bin report for the raw detection, so that compressed pulse data falling into this range bin can be selected from the stored video.

Knowledge of the PRI pattern(s) used during the appropriate dwell period.

Using this data, the Doppler measurement system can identify that a particular sequence of compressed pulse echoes represents strikes contributing to the detection. By combining the (p) and (q) parts for each compressed pulse into polar coordinates representing amplitude and phase, measured (but ambiguous) values of θ (p) are obtained between θ and 2π.

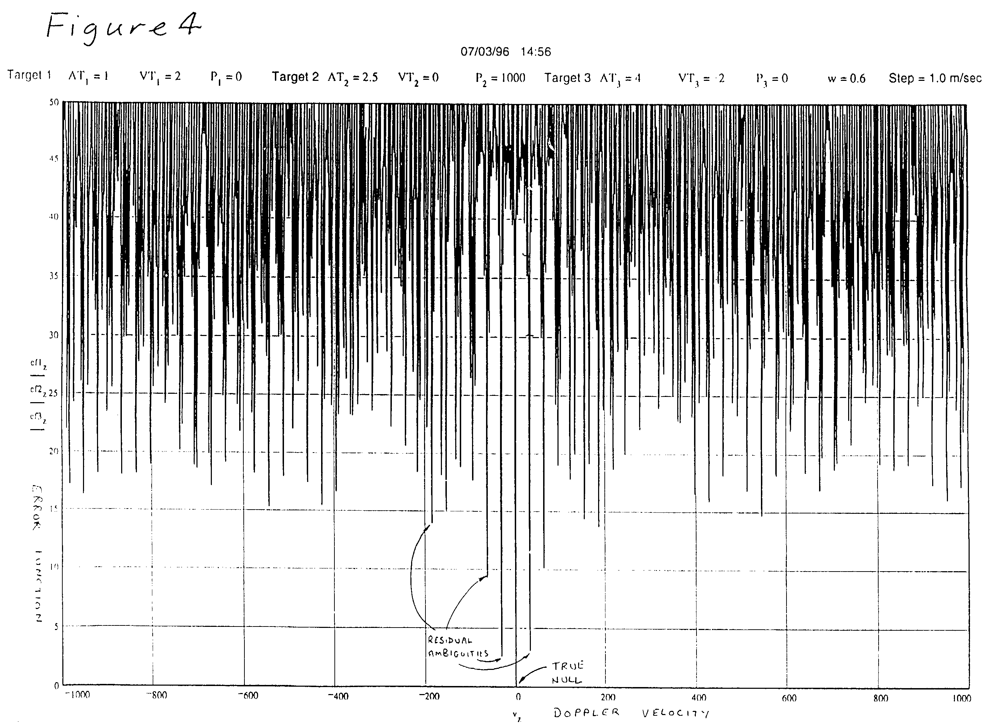

Referring to Figure 3 the horizontal (time) axis covers the appropriate dwell period and is additionally marked to show a time sequence of strikes at staggered PRI, taking the reference phase as θ (0) = 0, for convenience. (For a rotating-beam radar the horizontal axis would also represent beam azimuth and could, if desired, be marked to show the beam heading at which each strike was obtained.)

The vertical axis represents echo phase. The measured phase θ(p) for each strike lies in the range $0 \leq \theta < 2\pi$. These measurements are marked by crosses on Figure 3.

Each of these phase measurements is of course ambiguous in multiples of $\pm 2N\pi$, for reasons already explained. The unknown integer N will in general take a different value for each strike. The echo phases corresponding to all plausible values of N is marked on Figure 3, for each strike, and these are shown as dots. Initially, the position of line 1, is not known but it must start from the origin, which in Figure 3 is taken as [θ(0) =0; t(0) = 0].

Provided the available phase measurements are accurate, line 1 should pass exactly through one dot per strike, representing the true, unambiguous, relative phase shift. The correct position of this line is shown in Figure 3. Its slope (+20π in 10 millisecs) represents +1000 Hz which, as already known corresponds to the example 150 m/sec, i.e. the true target approach velocity.

If it is attempted to draw line 1 through the origin at any other slope, it will "miss" dots for at least some strikes (lines 1a, 1b) although there remains the possibility of a false result if it passes sufficiently close to them, (line 1c), The probability of this type of error increases if the positions of dots are corrupted by noise or interference affecting the phase measurements for each strike. However, the probability of error is decreased by ensuring that the stagger pattern is not too regular and by not processing very weak strikes (i.e. those with very low amplitude A(p) measurements) whose "dot" positions may be seriously corrupt. Subject to this proviso, as many strikes as possible should be processed in order to minimise residual ambiguities.

The slope represents the approach (ie. radial) velocity of the target and it will only remain constant if target velocity remains steady during the dwell time. The maximum plausible acceleration for a target of interest would typically be 10G, where G (= 9.81 ms$^{-2}$) is the acceleration due to gravity at the Earth's surface. During a period of 30 ms the velocity of a target subject to 10G acceleration would change by:

$$dv = 10 \times 9.81 \times 0.03 = 0.33 \text{ m/sec.}$$

This is very much less than the nominal Doppler resolution (5 m/sec: see above) of the example radar when using 30 ms dwell time. Thus whereas in theory target acceleration would cause line 1 to be slightly curved, the effects of this over a 30 ms period will he negligible for all targets likely to be of interest.

Line 1 can thus be assumed to be straight and therefore one empirical method of finding the true position of line 1 would be to pivot a straight thread or edge at the origin of Figure 3 and to rotate it slowly while observing whether it passes exactly through one dot for each strike. An equivalent procedure is relatively easy to implement by using iterative digital processing to calculate an error function based on the sum of "miss" distances between the "thread" and the nearest dots, while the "thread" is progressively rotated through an angular range representing all plausible Doppler shifts. The "correct" slope will be indicated by a null in the error function. Successful determination of the slope of line 1 by this means depends on the following assumptions:

a) The pivotal origin is taken at or close to the centre of the target strike sequence for this reduces the effect of any residual curvature due to target acceleration;

b) "Good" echo signals for the whole strike sequence can be obtained from a single range bin. By selecting the signals to be processed from the range bin containing detection threshold crossings obtained near the centre of the strike sequence (i.e. at the central origin) the residual loss due to target motion in range during the sequence of strikes to be processed can be reduced;

c) That the measured phase of the strike selected as the pivotal origin is not seriously corrupted by noise or interference. This implies that the strike echo at the selected origin should have the best possible signal-to-noise ratio ( SNR); this in turn implies a high amplitude A(p) value for this strike. Where the radar has a rotating antenna beam, this is best achieved by selecting as origin a strong echo at the centre of the strike sequence, where the beam points (almost) directly at the target azimuth. If the radar has a phased array antenna which does not scan the target during the dwell time, the strongest near-centre strike echo should be chosen as the origin. This illustrates one use of echo amplitude data.

d) That all other strike echoes processed and contributing to the slope error function have sufficiently high SNRs to create a distinctive null at the correct point of the error function, for reasons already given. Since Doppler measurement is cued by a raw MTI detection, it can be assumed that at least some of the strike echoes are strong enough to cross the detector threshold and are therefore useful for Doppler measurement. In general, a better measurement will result if more weight is allotted to strong echoes than to weak ones. This illustrates another use of echo amplitude data.

e) That the PRF stagger pattern in use is clearly unambiguous for all plausible Doppler shifts, having regard to the number of good (strong) strike echoes available for processing. A stagger pattern may need to be carefully chosen in order to validate this assumption. The simple, regular pattern illustrated in Figure 2 is not ideal in this respect. In practice an existing MTI radar clutter rejection stagger pattern will probably have to be used unaltered when Doppler measurement is added. Fortunately, an existing MTI stagger pattern carefully chosen in order to eliminate Doppler blindness should *ipso facto* be efficient at eliminating Doppler ambiguities.

The conditions necessary for the Invention to provide efficient, unambiguous Doppler extraction can be, and usually will be, met in any efficient type of MTI radar.

Having explained the principle of the invention, one practical implementation will now be described as applied to a typical MTI radar. The Invention is not limited to the particular implementation described below. Those skilled in the art will be readily able to apply the Invention to a variety of different MTI radars and in alternative ways with respect to points of practical detail.

With reference to Figure 1, the Doppler management unit DMU, is triggered each time the MTI detector unit 6 reports a raw detection. The raw detection report identifies the range bin in which the detection was obtained.

The detection process also provides information from which the existing plot extractor unit 7 calculates the azimuth position of the target. In the case of a radar with a rotating antenna whose beam (of finite width) scans across the target during the dwell time, the position of the target defines the centre of the target scan, ie. the interpolated instant (or azimuth) at which the beam was pointing most directly at the target and may be presumed to have returned the strongest strike echo, is also provided. Thus the reported target position is expected to correspond with the middle of a strike sequence although it will not, in general. coincide exactly with the nominal beam heading of any one pulse.

The digitised (p) and (q) video signals are fed continuously into the a cyclic video store (CVS). 8. A given MTI radar will be designed to use some finite maximum dwell time; the size of the CVS is sufficient to retain video signals received during this dwell period before they are cyclically overwritten, typically about 2 MByte of RAM.

Receiver blanking during radar transmitter pulses divides the digitised video signal into sections each slightly shorter than the radar PRI. Range bin numbering is thus inherent in the sequence of the digitised samples within each section. The DMU receives PRF-related synchronisation signals from unit 3 of the existing radar and uses these to time-tag the start of each section of video stored in the CVS. This enables the exact reception time of every sample stored in the CVS to be calculated when required.

When the MTI detector 6 reports a raw detection, information defining detection range bin and probable target position is received by the Doppler management unit DMU 9, which identifies the subset of stored video sections representing one dwell period centred on the reported target position. From these sections the DMU selects the (p) + (q) sample pairs whose (time) positions within the sample sequence indicates that they correspond with the range bin reported for the detection.

The DMU 9 copies these sample pairs to a temporary processing store accessed by the DEU 10 so that they cannot be cyclically overwritten before they have been processed. Each of the (typically 20) sample pairs copied is tagged with the start time-tag of the video section from which it has been taken.

The DEU 10 converts each (p) and (q) pair of video samples from Cartesian to polar format. ie. from amplitudes sampled in two quadrature channels into amplitude and phase [A(s), $\theta$(s), for sample (S)].

The DEU 10 next selects the origin. This will normally be coincident with the time and phase of the central sample pair from the range copied, ie. corresponding closely with the reported target position. If an even number of sample pairs have been copied the origin coincides with the central pair whose strike echo has the stronger amplitude A. The measured phase ($0 \leq \theta < 2\pi$) of the chosen origin sample is taken as the reference phase [$\theta$(r)j] for Doppler extraction purposes.

The DEU 10 selects the subset of strike samples which it will process. For strong, isolated detections this will normally be the full set of strike samples copied across from the CVS 8 and covering the full radar dwell time. However, where the radar has a rotating beam antenna which scans past the target heading, early and late strikes in the sequence, obtained *via* the edges of the beam profile, may be too weak (low measured amplitude A = poor SNR) to contribute usefully to the quality of Doppler measurement. Also, if two separate detections are reported close together and in adjacent or overlapping range bins, the Doppler shift of each target taken singly will be better measured by processing only strike samples on the "outer" sides of the estimated target centres.

The DEU 10 therefore employs a sample selection algorithm and rejects weak or doubtful strikes, identified according to simple threshold rules, in order to minimise possible corruption of the Doppler measurement process. In general, the maximum possible number of "good" strike samples should be retained for processing because this increases the probability of obtaining clear. unambiguous results.

The time (-) dt (S) (relative to the chosen origin) of each strike sample (S) retained for processing is calculated by subtracting their time tags from that of the origin strike. Now, for an arbitrary Doppler shift F(d) the expected phase θ (s) of each strike sample in the copied sequence can be calculated:

$$\theta \ (s) = \theta \ (r) + 2\pi \ x \ F(d) \ x \ dt \ (S) \ \text{radians.}$$

The expected phase can be reduced to the range $0 \le \theta < 2\pi$ as follows:

$$\theta \ (s') = 2\pi \ x \ \text{Mantissa} \ [\{\theta \ (r)\}/2\pi + F(d) \ x \ dt \ (S)] \ \text{radians}$$

Ideally, the (reduced) expected phase θ(s') for every strike processed will exactly match the measured phase θ(S) when, and only when, θ (s') has been calculated using a value of F(d) which exactly matches the true, unambiguous Doppler shift of the target which has been detected. In practice, due to noise, interference, and quantisation (sampling) losses, the match will never be exact; however, the error function should show a deep null at a point corresponding to the "correct" value of F (d).

The error function is essentially the weighted sum of the "miss" distances d(S) between θ(S) and θ(s') as F(d) is varied. In general:

$$d(S) = |\theta(s') - \theta(S)| \qquad \text{Hence } 0 \le d(S) < 2\pi$$

However, in cases where θ(S) is close either to zero or $2\pi$ a very small degree of measurement corruption could add almost $2\pi$ the value of d(S) calculated according to the formula given above. In order to deal with such cases a modified parameter d'(S) is used instead of d (S):
if

$$d \ (S) \le \pi, \ d' \ (S) = d \ (S)$$

if

$$d \ (S) > \pi, \ d' \ (S) = 2\pi - d \ (S) \qquad \text{Hence } 0 \le d' \ (S) < \pi.$$

Thus a typical formula for the error function is:

$$\text{Error Function} = 1/n \ x \ \text{Sum} \ [W \ x \ \{d' \ (S)\} \ ^\wedge w],$$

for each plausible value of F (d) where n is a normalising factor, W is a weight related to sample amplitude and w is a weight determining the power law for the miss distance.

Suitable values for weights W and w must be selected to suit the application. Normally w = 2 is a suitable value for most applications. The purpose of W is to reduce the contributions of weak samples in order to reduce the effects of noise and interference carried within such samples. Where the radar uses a rotating antenna whose beam scans in a known manner across the nominal target position the weight W can be a function of the off-target scan angle, so that samples in the centre of the copied sequence carry more weight than those near the ends of the sequence. However, it is advantageous to make the weights easy to calculate so that the complete error function can be generated very quickly.

The DEU evaluates the error function iteratively over the full range of positive and negative Doppler shifts F (d) plausible for targets of interest. For military aircraft radial velocities (V) in the range ±1000 m/sec may need to be covered. Where this is the case, since:

$$F (d) = 2 \times V/(\lambda)$$

the range of F (d) to be covered would be ±6.7 kHz in the case of the example radar where $\lambda = 0.3$ m.

The error function must cover the Doppler range in iterative steps which are smaller (and preferably quite a lot smaller) than the Doppler resolution which, as already explained, is inversely proportional to the dwell time covered by the strike sequence actually processed. The nominal Doppler resolution corresponding to a processed dwell time of 30 millisecs is 33.3 Hz (as already calculated). The absolute minimum number of steps required to cover a Doppler shift range of ±6.7 kHz would therefore be:

Minimum number of iterations = 2 x 6700/33.3 = 400, approx

Figure 4 shows an example of an error function generated in this way (but using more than 400 iterations). Numerous secondary nulls, representing residual PRF ambiguities, can be seen in the error function but the unique, deep null indicates the true measured Doppler shift F (d) ; from F (d) the radial velocity of the target is easily calculated by the formula already given.

In order to control false alarm rate a null depth threshold is set. Any null not reaching this threshold is rejected. This means that, for some raw detections, no Doppler measurement will be reported. In the large majority of cases this will apply only to very weak detections (low SNR), or to false detections due to distributed moving clutter. Exploitation of this effect is explained in a later Section.

In practice, use of the theoretical minimum number of iterations, as defined above, may not be sufficient to ensure that a unique, threshold-crossing null is found in the error function, even for some "genuine" targets. This is especially the case where:

the PRF stagger sequence is inefficient (too short, or too regular);
relatively few "good" strike samples are available; or
SNR is relatively poor.

These types of deficiency may cause false or ambiguous nulls to appear in the error function, as in Figure 4. In general, the true null should be deeper than any of the false or ambiguous nulls (as in Figure 4) but since the true null may be relatively narrow, its true depth may not be measured if a coarse iteration step is used. Appreciable improvement is obtained by reducing the step so that approximately three times the minimum number of iterations are used. In critical cases, further null improvement is seen when using around 10 times the minimum number. Figure 4 uses 2,000 steps each equivalent to 1.0 m/sec in order to obtain a clear-cut result. In practice, selection of an optimum step size must take account of the processing time required for very large numbers of iterations.

One useful stratagem is to generate the complete error function relatively quickly by using a fairly coarse step, threshold it to find coarse nulls (of which there will typically be several) and then to recalculate small sections of the function in the vicinity of these nulls, using a relatively fine step in order to determine which of the coarse nulls is in fact the deepest and whether it crosses the final acceptance threshold.

A variant of this stratagem once the approximate positions of candidate nulls have been determined, is to perform a weighted "least sum of squares" fit (using known algorithms) to determine the absolute minimum null value obtainable for each candidate null region. One advantage of this variant is that the "best fit" algorithm is not based on any assumption that the reference phase θ (r) of the central strike has been measured with negligible error. This allows deeper and more reliable null values to be found in cases where SNR is relatively poor.

Those skilled in the art will realise that there are other known methods, not described here, for refining this type of measurement. Such methods may, of course, be applied if desired. In concept, Doppler extraction performance may be improved to the point where it equals or even exceeds that of a good Doppler radar having a similar antenna and transmitter capability. In practice, cost and processing speed restraints limit the refinements which can usefully be applied.

The DEU 10 reports the Doppler measurement as a supplement to the raw detection report. Since the DMU 9 does not trigger Doppler extraction until a raw detection is reported, the Doppler report will lag the initiating detection report by the time required to perform the Doppler measurement. For example, 1000 error function iterations for a 20-strike sequence requires 20,000 calculations each requiring, say, 50 basic operations performed at 50 MHZ clock rate. The complete Doppler measurement sequence would thus typically take 30 millisecs (ie. comparable with the dwell time) so the Doppler measurement system can just cope with a series of detection reports spaced intervals of beamwidth (ie. comparable with the nominal azimuth resolution of the radar antenna).

In order to unite the Doppler measurement with the raw detection report to which it refers, relay of the latter to the plot extraction unit 7 is delayed (by approximately one dwell period) until Doppler measurement is complete. One way to implement this is for the DMU 9 to store the raw detection data temporarily during the Doppler measurement period so that detection and Doppler data are always passed on together. Those skilled in the art will know that there are alternative ways to deal with Doppler measurement latency. The determination of an approach velocity by the DEU is used by the plot extractor 1 to verify that the target is of interest.

In cases where MTI subtraction has enabled the detector to report a provisional target detection within a region of strong clutter, application of the invention to the pre-MTI signal may find and report a Doppler measurement relating to the (stationary or slow-moving) clutter rather than to a moving target of interest. Such cases may be instantly recognised by the zero or very low value of the velocity reported. In such cases it is necessary to perform further processing according to the Invention in order to find and measure the Doppler velocity of the wanted moving target "hidden" in the strong clutter echoes. (Application of the invention to post-MTI signals may be ineffective because the subtraction process may cause phase corruption when PRI stagger is used.)

In such cases the invention can be applied as previously described to pre-MTI stored signals. If this fails to find a plausible target velocity it will instead report the mean velocity of the clutter, which clutter may overlay an appropriate expected target position, for example when chaff has been deployed. An estimate of the clutter amplitude is made by the Doppler processor (10). For strong clutter this can typically be taken as 90% of the signal amplitude in the region of the expected target. The Doppler extraction processor digitally generates a synthetic clutter echo. reproducing the pulse-by-pulse phase differences corresponding to the estimated amplitude, the mean clutter velocity, and to the known PRI stagger pattern. The correct absolute phase of the clutter signal is not known at this stage of the processing, so the synthetic signal is generated at arbitrary absolute phase.

The Doppler extraction processor then performs phase-coherent subtraction of the synthetic signal from the real stored signal, measuring the amplitude of the residual difference resulting from the subtraction. This subtraction is repeated iteratively while the absolute phase of the synthetic signal is altered in steps. The phase step giving the smallest residue is selected. Coarse and fine steps may be used to reduce the total processing load with further iterative subtraction possible to minimise the residual signal amplitude and thus maximises the cancellation of the clutter signal. The Doppler extraction processor then assigns a target approach velocity procesed from the residual containing target returns (and system noise) but no longer heavily overlaid by clutter. Provided the SNR of the residual signal is satisfactory, this will result in correct measurement of the wanted target velocity, free of clutter.

Those skilled in the art will recognise that many of the above processes could, if desired, be performed using known fast Fourier transform (FFT) techniques instead of the simple, but slower, techniques outlines in the exemplary explanation given above. However, the techniques exemplified are fully effective and have been tested using target and clutter echoes received by a real MTI radar under normal operating conditions.

The invention has been described above with reference to an existing MTI radar. However the invention may apply equally to other types of radar and protection is sought for all such radars within the scope of the following claims.

## Claims

1. Radar apparatus comprising:

   a transmitter (4) arranged to transmit a series of pulses;
   a receiver (5) arranged to receive and store successive echo signals from potential targets; and
   a detector (6) arranged to identify echoes of interest by means of a thresholding process applied to data originating from the received signals characterised in that a Doppler extraction processor (10) is arranged to process stored data corresponding to an echo of interest identified by the detector (6) in order to determine the approach velocity of a potential target corresponding to that echo.

2. Apparatus as claimed in claim 1 wherein the detector comprises means for subtracting successive received echoes and thresholding the difference signal obtained to determine an echo of interest.

3. Apparatus as claimed in claim 1 or 2 wherein the stored data is identified chronologically.

4. Apparatus as claimed in any preceding claim wherein the Doppler extraction processor (10) is arranged to receive from the stored data the relative phases of successive received echoes, compare a range of velocity values with the phase data and identify the velocity value that best fits the phase data.

5. Apparatus as claimed in claim 4 wherein the range of velocity values is limited to a plausible range for a particular target type.

6. Apparatus as claimed in claim 4 or 5 wherein the Doppler extraction processor (10) is arranged to determine an error value for each of the range of velocity values, the set of such values constituting an error function, and identify nulls in the error function.

7. Apparatus as claimed in claim 6 wherein the Doppler extraction processor (10) determines a finer range of velocity values for a section of an error function about a previously identified null.

8. Apparatus as claimed in claim 6 or 7 wherein the Doppler extraction processor (10) assigns an approach velocity to a echo of interest when a null in the error function corresponding to that velocity is below a predetermined threshold.

9. Apparatus as claimed in claim 6 or 7 or 8 wherein the Doppler extraction processor (10) applies a weighted "least sum of squares fit" to a null to determine the minimum of the null.

10. Apparatus as claimed in any proceeding claim wherein the transmitter (4) varies the pulse repetition interval of the transmitted signal.

11. Apparatus as claimed in any proceeding claim wherein the Doppler extraction processor (10) only processes echoes which correspond to a range bin of the radar in which the potential target of interest is first identified.

12. Apparatus as claimed in any preceding claim wherein the output of Doppler extraction processor (10) is used to verify the target as being of interest if a non zero velocity can be determined.

13. Apparatus as claimed in any preceding claim further comprising means for identifying slow moving clutter at least in part in dependance on the approach velocity determined by the Doppler extraction processor, means for estimating the amplitude of the signal returned by said clutter, means for generating a synthetic clutter signal and subtracting this from the received data corresponding to said clutter to obtain a residual echo signal, wherein the Doppler extraction processor determines the approach velocity of a target corresponding to the residual echo signal.

14. Apparatus as claimed in claim 13 wherein the synthetic clutter signal is subtracted from the received signal at a plurality of different phase shifts in order to determine the relative phase which provides a minimum residual signal, whereby the Doppler extraction processor determines the approach velocity of a potential target corresponding to the minimum residual signal.

15. A method of determining approach velocity information from a moving target indicator (MTI) radar, the method comprising storing successive returned radar signals, retrieving stored data relating to a target of interest identified by the MTI radar, and processing that data to determine the approach velocity of the corresponding target.

16. A method of determining the approach velocity of a target, the method comprising:

   transmitting a sequence of pulses of electro magnetic radiation;
   receiving and storing data from successive echoes from potential targets;
   identifying echoes of interest by applying a thresholding process to data originating from successive received echoes from a potential target; and
   for an echo of interest determining the approach velocity of that target.

17. A method as claimed in claim 15 or 16 further comprising:

   retrieving from the stored data the relative phase of successive echoes from a target of interest;
   comparing a range of velocity values with the phase data; and

identifying the velocity value that best fits the phase data.

18. A method as claimed in claim 17 further comprising determining an error value for each of the range of velocity values, the set of such values constituting an error function and identifying nulls in the error function.

19. A method as claimed in claim 18 comprising the further step of determining the error function for a finer range of velocities values about a previously identified null in the error function.

20. A method as claimed in claim 18 or 19 comprising assigning an approach velocity to a target of interest when a null in the error function is below a predetermined threshold.

21. A method as claimed in any one of claims 18, 19 or 20 further comprising applying a weighted "least squares fit" to a null to determine the minimum of the null.

Figure 1

Figure 2

Figure 3

# Figure 4

Target 1  $AT_1 = 1$   $VT_1 = 2$   $P_1 = 0$   Target 2  $AT_2 = 2.5$   $VT_2 = 0$   $P_2 = 1000$   Target 3  $AT_3 = 4$   $VT_3 = 2$   $P_3 = 0$   w = 0.6   Step = 1.0 m/sec

EP 0 851 238 A2

18